# EUROPÄISCHE PATENTSCHRIFT

(11) **EP 2 998 134 B1**
(45) Veröffentlichungstag und Bekanntmachung des Hinweises auf die Patenterteilung: **03.05.2017**
(21) Anmeldenummer: 15180563.7
(22) Anmeldetag: 11.08.2015
(51) Int. Cl.: B60C 23/04

(54) **REIFENDRUCKKONTROLLSYSTEM FÜR EIN FAHRZEUG**
TYRE PRESSURE CONTROL SYSTEM FOR A VEHICLE
SYSTEME DE CONTROLE DE PRESSION DE PNEU POUR UN VEHICULE AUTOMOBILE

(30) Priorität: 19.09.2014 DE 102014113573
(43) Veröffentlichungstag der Anmeldung: 23.03.2016
(73) Patentinhaber: Huf Hülsbeck & Fürst GmbH & Co. KG, 42551 Velbert (DE)
(72) Erfinder: GORENZWEIG, Igor, 42109 Wuppertal (DE); MÖNIG, Stefan, 58332 Schwelm (DE); DEMENTYEV, Yevgen, 42287 Wuppertal (DE); ARNOLDO, Sven, 76316 Malsch (DE); DUSSINGER, Axel, 74906 Bad Rappenau (DE); GAMER, Benedikt, 75045 Walzbachtal (DE)
(74) Vertreter: Zenz Patentanwälte Partnerschaft mbB

(56) Entgegenhaltungen:
- DE-U1-202009 007 703

## Beschreibung

Die Erfindung richtet sich auf ein Reifendruckkontrollsystem für ein Fahrzeug zur Ermittlung reifenspezifischer Parameter, aufweisend einen Ventilkörper, wenigstens ein Befestigungselement und einen Reifenluftdrucksensor mit einem Gehäuse, in welchem Mittel zur Bestimmung mindestens eines reifenspezifischen Parameters und zur drahtlosen Übertragung des mindestens einen reifenspezifischen Parameters an ein fahrzeugseitiges Steuergerät untergebracht sind, wobei das Gehäuse einen Befestigungsbereich aufweist und der Ventilkörper einen Befestigungsabschnitt umfasst, und wobei der Befestigungsabschnitt des Ventilkörpers mit Hilfe eines Befestigungselements lösbar mit dem Befestigungsbereich des Gehäuses in Eingriff steht.

Die Fahrzeugsicherheit und Zuverlässigkeit sind zentrale Aspekte in der Automobiltechnik. Daher sollte allein schon aus sicherheitstechnischen Gründen der Reifendruck von Fahrzeugen bzw. Kraftfahrzeugen regelmäßig überprüft werden, was jedoch häufig vom Fahrzeugführer versäumt wird. Aus diesem Grund werden in modernen Fahrzeugen vermehrt Erfassungsvorrichtungen in Form von Reifenluftdrucksensoren verwendet, die den Reifenluftdruck automatisch messen und an ein fahrzeugseitiges Steuergerät senden. Dadurch sollen Defekte oder Unfälle, welche auf einen zu niedrigen Reifenluftdruck zurückzuführen sind, vermieden werden. Folglich soll durch diese automatische Messung des Reifenluftdrucks eine kritische Abweichung des gemessenen Reifenluftdrucks von einem Reifendrucksollwert frühzeitig erkannt und dem Fahrzeugführer angezeigt werden, so dass eine manuelle Überprüfung entbehrlich ist. Bei solchen Systemen zur automatischen Messung des Reifenluftdrucks ist jeweils ein Reifenluftdrucksensor an jedem Rad bzw. Luftreifen angeordnet. Ein Reifenluftdrucksensor umfasst dabei oft mindestens einen Sensor zur Erfassung des Reifenluftdrucks oder der Temperatur sowie eine Sendeeinheit und gegebenenfalls eine Auswerteelektronik, die aber auch fahrzeugseitig vorgesehen sein kann.

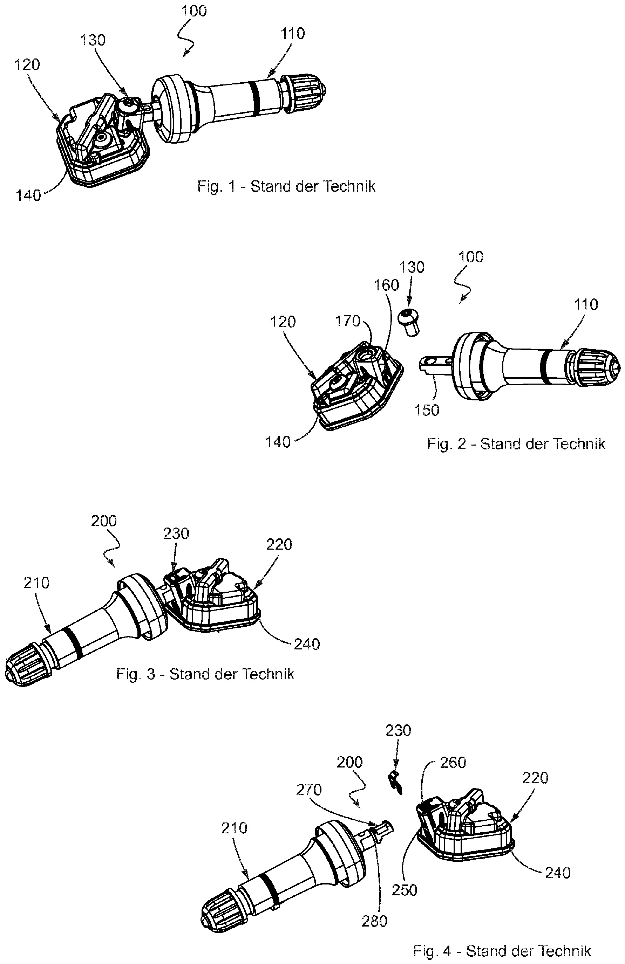

In den Figuren 1 und 2 ist ein Reifendruckkontrollsystem 100 der Eingangs bezeichneten Art gezeigt, welches zum Beispiel aus der DE 10 2010 050 365 A1 bekannt ist. Dieses bekannte System 100 umfasst einen Ventilkörper 110, einen Reifenluftdrucksensor 120 und ein den Ventilkörper 110 an dem Reifenluftdrucksensor 120 fixierendes Befestigungselement 130, wobei das Befestigungselement 130 als eine Schraube ausgebildet. Zur Montage des Ventilkörpers 110 an dem Reifenluftdrucksensor 120 wird der Ventilkörper 110 mit seinem Befestigungsabschnitt 150 in eine an dem Gehäuse 140 des Reifenluftdrucksensors 120 ausgebildete Aufnahme 160 eingesteckt. Die Aufnahme 160 weist eine Bohrung 170 auf, die quer zur Einsteckrichtung des Ventilkörpers 110 verläuft und in die das als Schraube ausgebildete Befestigungselement 130 eingeschraubt wird, um den Ventilkörper 110 an dem Gehäuse 140 zu befestigen. Nachteilig bei diesem bekannten Reifendruckkontrollsystem 100 ist es, dass bei dem Montagevorgang die Gefahr besteht, dass das als Schraube ausgebildete Befestigungselement 130 verloren geht und dass eine Montagehilfe in Form eines Schraubendrehers notwendig ist, um die Schraubverbindung herzustellen, die letztlich den Ventilkörper 110 an dem Gehäuse 140 des Reifenluftdrucksensors 120 hält.

Ein anderes Reifendruckkontrollsystem 200 ist in den Figuren 3 und 4 gezeigt. Dieses Reifendruckkontrollsystem 200 entspricht ebenfalls der Eingangs bezeichneten Art und ist zum Beispiel aus der DE 10 2004 048 244 A1 bekannt. Dieses bekannte System 200 weist auch einen Ventilkörper 210, einen Reifenluftdrucksensor 220 und ein den Ventilkörper 210 an dem Reifenluftdrucksensor 220 fixierendes Befestigungselement 230 auf. Jedoch ist bei diesem Reifendruckkontrollsystem 200 das Befestigungselement 230 als ein Federclip ausgebildet. Dennoch wird auch hierbei der Ventilkörper 210 in eine an dem Gehäuse 240 des Reifenluftdrucksensors 220 ausgebildete Aufnahme 250 eingesteckt, um den Ventilkörper 210 an dem Reifenluftdrucksensor 220 zu befestigen. Die Aufnahme 250 weist einen Einsteckschlitz 260 auf, der quer zur Einsteckrichtung des Ventilkörpers 210 verläuft und in die das als Federclip ausgebildete Befestigungselement 230 eingesteckt wird, um in eine in der Umfangsfläche des Befestigungsabschnitts 270 des Ventilkörpers 210 ausgebildete Ausnehmung 280 einzugreifen und dadurch den Ventilkörper 210 an dem Gehäuse 240 zu befestigen. Auch bei diesem bekannten Reifendruckkontrollsystem 200 ist es von Nachteil, dass zur Montage ein separates Befestigungselement 230 vorgesehen ist, welches die Montage des Ventilkörpers 210 an dem Gehäuse 240 erschwert.

Ein Reifendruckkontrollsystem der eingangs bezeichneten Art ist zum Beispiel aus der DE 20 2009 007 703 U1 bekannt. Bei diesem bekannten Reifendruckkontrollsystem ist ein Ventilkörper mittels einer Sicherungseinheit lösbar an einem Gehäuse verbunden. Die Sicherungseinheit ist als einstückig aus einem Metallblech realisiertes federndes Bügelelement ausgebildet, wobei ein Kontaktabschnitt des Bügelelements mit einer in dem Gehäuse untergebrachten Leiterplatte verlötet ist.

Der Erfindung liegt die Aufgabe zugrunde eine Lösung zu schaffen, die auf konstruktiv einfache Weise ein Reifendruckkontrollsystem bereitstellt, das leicht, kompakt, kostengünstig und einfach zu montieren ist.

Bei einem Reifendruckkontrollsystem der Eingangs bezeichneten Art wird die Aufgabe erfindungsgemäß dadurch gelöst, dass das Befestigungselement einstückig mit dem Gehäuse des Reifenluftdrucksensors ausgebildet ist, wobei das Befestigungselement zusammen mit dem Gehäuse aus einem einzigen und einheitlichen Werkstoff gefertigt ist.

Vorteilhafte und zweckmäßige Ausgestaltungen und Weiterbildungen der Erfindung ergeben sich aus den Unteransprüchen.

Durch die Erfindung wird ein Reifendruckkontrollsystem für ein Fahrzeug zur Ermittlung reifenspezifischer Parameter zur Verfügung gestellt, das sich durch eine funktionsgerechte Konstruktion auszeichnet und einen einfachen und kostengünstigen Aufbau aufweist. Dadurch, dass das Befestigungselement einstückig mit dem Gehäuse des Reifenluftdrucksensors ausgebildet ist, kann eine werkzeuglose Montage und Demontage von Ventilkörper und Reifenluftdrucksensor durchgeführt werden. Zusätzlich zu der werkzeuglosen Montage und Demontage ist die Bauteilanzahl des Reifendruckkontrollsystems verringert, was sich in einer Reduzierung der Herstellkosten vorteilhaft niederschlägt. Der Ausdruck "einstückig" ist bei der vorliegenden Erfindung als Synonym für die Bezeichnung "einteilig" zu verstehen. Dabei meint "einstückig" im Sinne der Erfindung, dass das Befestigungselement zusammen mit dem Gehäuse derart gefertigt sein muss, dass diese Bauteile aus einem einzigen und einheitlichen Teil oder Werkstoff gefertigt sein müssen. "Einstückig" im Sinne der Erfindung meint zusätzlich Ausführungen, bei denen das Befestigungselement und das Gehäuse des Reifenluftdrucksensors nicht nur fest sondern so innig miteinander verbunden sind, dass sie nicht als mehrere aneinander gefügte Bauteile erscheinen und nur voneinander gelöst werden können, wenn sie dabei zerstört werden.

Für eine werkzeuglose Montage sieht die Erfindung in konkreter Ausgestaltung vor, dass der Befestigungsabschnitt des Ventilkörpers eine rampenförmige Schrägfläche aufweist, die auf der Umfangsfläche des Ventilkörpers angeformt ist und über welche das elastisch gelagerte Befestigungselement bei Montage des Ventilkörpers an dem Reifenluftdrucksensor schiebbar ist, um den Befestigungsabschnitt des Ventilkörpers mit dem Befestigungselement des Gehäuses in Eingriff zu bringen. Zum Beispiel kann das Befestigungselement als ein Schnapphaken ausgebildet sein, welcher bei Montage durch die Schrägfläche ausgelenkt wird und nach Passieren der Schrägfläche in eine Ausnehmung in dem Ventilkörper eingreift, um den Ventilkörper an dem Gehäuse zu befestigen.

Dementsprechend sieht die Erfindung in Ausgestaltung vor, dass das Befestigungselement wenigstens einen Rasthaken aufweist, der sich bei montiertem Ventilkörper in dessen Längsrichtung erstreckt. Bei Montage wird der wenigstens eine Rasthaken in Eingriff mit einem entsprechend an dem Ventilkörper ausgebildeten Bereich gebracht.

Diesbezüglich sieht die Erfindung in weiterer Ausgestaltung des Reifendruckkontrollsystems vor, dass nach Montage des Ventilkörpers an dem Reifenluftdrucksensor der wenigstens eine Rasthaken des Befestigungselements in eine am Verbindungsabschnitt des Ventilkörpers ausgebildete Ausnehmung eingreift. Die Ausnehmung an dem Verbindungsabschnitt kann umfangsabschnittsweise oder vollständig umlaufend ausgebildet sein.

Als Alternative zu der Ausnehmung in dem Verbindungsabschnitt des Ventilkörpers ist gemäß der Erfindung in Ausgestaltung vorgesehen, dass nach Montage des Ventilkörpers an dem Reifenluftdrucksensor der wenigstens eine Rasthaken des Befestigungselements einen am Verbindungsabschnitt des Ventilkörpers angeformten Flansch hintergreift.

Wesentlich ist also für beide Ausgestaltungen, dass der Befestigungsabschnitt des Ventilkörpers derart ausgebildet ist, dass der Rasthaken des Gehäuses mit dem speziell ausgebildeten Bereich des Befestigungsabschnitts in Eingriff bringbar ist, um den Ventilkörper an dem Gehäuse des Reifenluftdrucksensors zu befestigen.

Damit der wenigstens eine Rasthaken beispielsweise mit dem als rampenförmige Schrägfläche ausgebildeten Befestigungsabschnitt zusammenwirken kann, ist in Ausgestaltung der Erfindung vorgesehen, dass der wenigstens eine Rasthaken über wenigstens einen elastisch verformbaren Lagerarm am Befestigungsbereich relativ bewegbar zu dem Gehäuse gehalten ist. Auf diese Weise ist wenigstens eine werkzeuglose Montage des Ventilkörpers an dem Reifenluftdrucksensor möglich.

Hinsichtlich der Möglichkeit der werkzeuglosen Montage (und auch Demontage) sieht die Erfindung in weiterer Ausgestaltung vor, dass sich der wenigstens eine Lagerarm bei montiertem Ventilkörper quer zu dessen Längsrichtung erstreckt, wobei der wenigstens eine Lagerarm nach Art eines Torsionsstabs ausgebildet ist, durch welchen der wenigstens eine Rasthaken bei einer Schwenkbewegung um die Drehachse des wenigstens einen Lagerarms außer Eingriff mit dem Befestigungsabschnitt des Ventilkörpers bringbar ist.

Dazu ist es für eine alternative Ausgestaltung von Vorteil, wenn sich der wenigstens eine Lagerarm bei montiertem Ventilkörper parallel zu dessen Längsrichtung erstreckt, wobei der wenigstens eine Lagerarm endseitig an seinem dem Rasthaken abgewandten Längsende am Gehäuse gelagert und nach Art eines Federarms ausgebildet ist, der bei einer von der Längsrichtung des Ventilkörpers wegweisenden Schwenkbewegung den wenigstens einen Rasthaken außer Eingriff mit dem Ventilkörper bringt.

Als konkrete Ausgestaltung der Alternative sieht die Erfindung vor, dass der wenigstens eine Rasthaken als elastisch schwenkbarer und U-förmiger Bügel ausgebildet ist, der nach Montage des Ventilkörpers an dem Reifenluftdrucksensor einen am Befestigungsabschnitt des Ventilkörpers angeformten Befestigungsansatz übergreift.

Für eine ganz alternative Ausführungsform eines einstückig mit dem Gehäuse ausgebildeten Befestigungselements sieht die Erfindung in Ausgestaltung vor, dass das Befestigungselement eine deckelförmig ausgebildete Klemmkappe aufweist, die über ein Filmscharnier mit dem Gehäuse verbunden ist, wobei der Befestigungsbereich des Gehäuses kastenförmig ausgebildet ist und die Klemmkappe nach Montage des Ventilkörpers an dem Reifenluftdrucksensor auf dem kastenförmigen Befestigungsbereich lösbar befestigt ist und dabei mit dem Befestigungsabschnitt des Ventilkörpers in Eingriff steht.

Für eine werkzeuglose Montage des Befestigungselements dieser alternativen Ausführungsform sieht die Erfindung in Ausgestaltung vor, dass der kastenförmige Befestigungsbereich des Gehäuses wenigstens einen sich bei montiertem Ventilkörper quer zu dessen Längsrichtung erstreckenden Klemmsteg aufweist und in der Klemmkappe wenigstens eine zu dem wenigstens einen Klemmsteg komplementär ausgebildete Klemmaussparung ausgebildet ist, wobei die Klemmkappe über eine Klemmverbindung, die nach Montage der Klemmkappe an dem Befestigungsbereich von dem in der wenigstens einen Klemmaussparung eingeklemmten Klemmsteg ausgebildet ist, an dem Gehäuse den Befestigungsabschnitt des Ventilkörpers verriegelnd fixiert befestigt ist.

Zur Fixierung des Ventilkörpers an dem alternativen Befestigungselement ist dann weiter vorgesehen, dass ein Klemmansatz, der sich bei montiertem Ventilkörper von der Klemmkappe quer zur Längsrichtung des Ventilkörpers erstreckt, einen am Verbindungsabschnitt des Ventilkörpers angeformten Vorsprung derart hintergreift, dass eine Bewegung des Ventilkörpers in dessen Längsrichtung weg von dem Gehäuse blockiert ist.

Schließlich sieht die Erfindung in weiterer Ausgestaltung des Reifendruckkontrollsystems vor, dass der Befestigungsabschnitt des Ventilkörpers zumindest abschnittsweise eine Abflachung aufweist und der Befestigungsbereich des Gehäuses eine komplementär zur Abflachung ausgebildete Einsteckaufnahme aufweist, so dass zur Montage des Ventilkörpers an dem Reifenluftdrucksensor der Befestigungsabschnitt des Ventilkörpers verdrehsicher in die Einsteckaufnahme einsteckbar ist.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhaft bevorzugte Ausführungsbeispiele der Erfindung dargestellt sind. In der Zeichnung zeigt:
Figur 1 ein aus dem Stand der Technik bekanntes Reifendruckkontrollsystem in Perspektivansicht,
Figur 2 das bekannte Reifendruckkontrollsystem aus Figur 1 in einer perspektivischen Einzelteildarstellung,
Figur 3 ein weiteres, aus dem Stand der Technik bekanntes Reifendruckkontrollsystem in Perspektivansicht,
Figur 4 das bekannte Reifendruckkontrollsystem aus Figur 3 in einer perspektivischen Einzelteildarstellung,
Figur 5 ein Reifendruckkontrollsystem gemäß einer ersten Ausführungsform der vorliegenden Erfindung in Perspektivansicht,
Figur 6 ein Gehäuse eines Reifendrucksensor gemäß der ersten Ausführungsform des Reifendruckkontrollsystems aus Figur 5 in perspektivischer Ansicht,
Figur 7 eine vergrößerte Ansicht eines Befestigungsbereichs des Reifendrucksensors aus Figur 6 in Perspektivansicht,
Figur 8 ein Befestigungselement des Reifendrucksensors in einer seitlichen Schnittdarstellung,
Figur 9 eine vergrößerte Ansicht eines Ventilkörpers des Reifendruckkontrollsystems aus Figur 5 gemäß einer ersten Ausführungsvariante,
Figur 10 eine seitliche Schnittansicht des mit dem Ventilkörper aus Figur 9 in Eingriff stehenden Befestigungselements,
Figur 11 eine seitliche Schnittansicht des Befestigungselements, welches mit dem Ventilkörper gemäß Figur 9 nicht mehr in Eingriff steht,
Figur 12 eine vergrößerte Ansicht eines Ventilkörpers des Reifendruckkontrollsystems aus Figur 5 gemäß einer zweiten Ausführungsvariante,
Figur 13 eine seitliche Schnittansicht des mit dem Ventilkörper aus Figur 12 in Eingriff stehenden Befestigungselements,
Figur 14 eine seitliche Schnittansicht des Befestigungselements, welche mit dem Ventilkörper gemäß Figur 12 nicht mehr in Eingriff steht,
Figur 15 ein Reifendruckkontrollsystem gemäß einer zweiten Ausführungsform der vorliegenden Erfindung in Perspektivansicht,
Figur 16 ein Gehäuse eines Reifendrucksensor gemäß der zweiten Ausführungsform des Reifendruckkontrollsystems aus Figur 15 in perspektivischer Ansicht,
Figur 17 in Perspektivansicht eine vergrößerte Darstellung eines Ventilkörpers gemäß der zweiten Ausführungsform des Reifendruckkontrollsystems aus Figur 15,
Figur 18 eine seitliche Schnittansicht eines mit dem Ventilkörper aus Figur 16 in Eingriff stehenden Befestigungselements gemäß der zweiten Ausführungsform des Reifendruckkontrollsystems aus Figur 15,
Figur 19 eine seitliche Schnittansicht des Befestigungselements aus Figur 18, welches mit dem Ventilkörper gemäß Figur 17 nicht mehr in Eingriff steht,
Figur 20 ein Reifendruckkontrollsystem gemäß einer dritten Ausführungsform der vorliegenden Erfindung in perspektivischer Einzelteildarstellung,
Figur 21 das Reifendruckkontrollsystem aus Figur 20 mit an dem Reifendrucksensor montiertem Ventilkörper,
Figur 22 eine vergrößerte Schnittansicht des Befestigungselements des Reifendruckkontrollsystem gemäß der dritten Ausführungsform der vorliegenden Erfindung,
Figur 23 eine vergrößerte Schnittansicht eines Befestigungsbereichs eines Gehäuses eines Reifendrucksensors gemäß der dritten Ausführungsform der vorliegenden Erfindung und
Figur 24 die dritte Ausführungsform der vorliegenden Erfindung nach Montage des Ventilkörpers an dem Gehäuse.

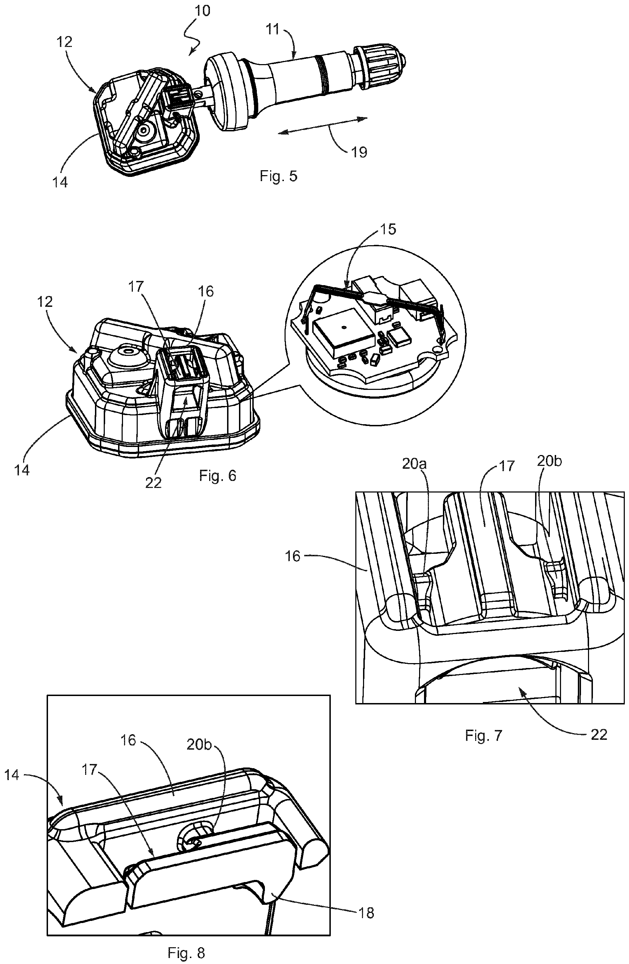

In den Figuren 5 bis 14 ist ein Reifendruckkontrollsystem 10 gemäß einer ersten Ausführungsform der Erfindung gezeigt. Das Reifendruckkontrollsystem 10 ist bekanntermaßen bei einem Fahrzeug einsetzbar und dient zur Ermittlung reifenspezifischer Parameter, wie beispielsweise Luftdruck oder Temperatur. Das in Figur 5 gezeigte Reifendruckkontrollsystem 10 umfasst einen Ventilkörper 11 und einen Reifenluftdrucksensor 12. Der Reifenluftdrucksensor 12 weist ein Gehäuse 14 auf, welches im Detail in Figur 6 dargestellt ist und in oder an dem Mittel 15 (in Figur 6 exemplarisch ein Sensor 15) zur Bestimmung mindestens eines reifenspezifischen Parameters und zur drahtlosen Übertragung des mindestens einen reifenspezifischen Parameters an ein fahrzeugseitiges Steuergerät untergebracht sind. Das Gehäuse 14 weist einen Befestigungsbereich 16 auf, der schornsteinförmig von dem Gehäuse 14 absteht und zur Fixierung des Ventilkörpers 11 dient.

Der Befestigungsbereich 16 umfasst ein Befestigungselement 17, welches im Detail in den Figuren 7 und 8 dargestellt ist. Das Befestigungselement 17 ist erfindungsgemäß einstückig mit dem Gehäuse 14 des Reifenluftdrucksensors 12 ausgebildet und weist einen Rasthaken 18 auf. Der Rasthaken 18 erstreckt sich bei montiertem Ventilkörper 11 in Längsrichtung 19 des Ventilkörpers 11 (siehe zum Beispiel Figur 5). Über zwei seitliche Lagerarme 20a und 20b, die elastisch verformbar sind, ist der Rasthaken 18 an dem Befestigungsbereich 16 des Gehäuses 14 gehalten und relativ zum Gehäuse 14 bewegbar. Es versteht sich, dass in einer alternativen Abwandlung auch nur ein einziger Lagerarm vorgesehen sein kann, um den Rasthaken zu halten. Die Lagerarme 20a, 20b erstrecken sich quer zu dem Rasthaken 18 und quer zu der Längsrichtung 19 des montierten Ventilkörpers 11 und ermöglichen eine Schwenkbewegung des Rasthakens 18 um die Drehachse 21 der beiden Lagerarme 20a, 20b, so dass die beiden Lagerarme 20a, 20b jeweils nach Art eines Torsionsstabs oder einer Torsionsfeder ausgebildet sind und entsprechend wirken. Bei einer Drehung des Rasthakens 18 um die Drehachse 21 verwinden sich die beiden Lagerarme 20a und 20b., d.h. eine Auslenkung der Lagerarme 20a, 20b findet nicht statt.

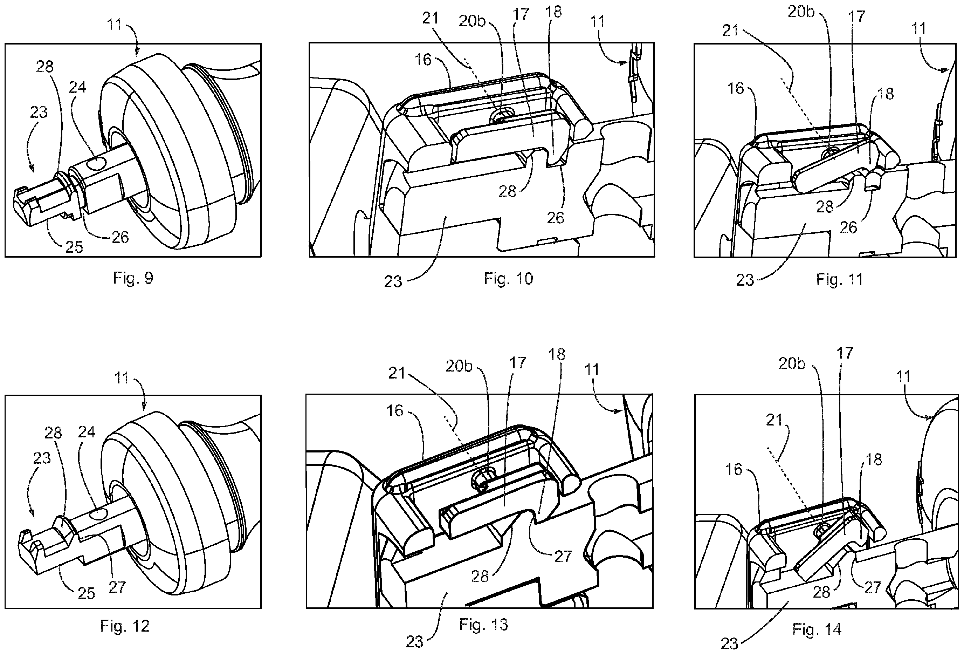

Der Befestigungsbereich 16 des Gehäuses 14 weist eine Einsteckaufnahme 22 auf (siehe Figur 6), die unterhalb des Befestigungselements 17 angeordnet ist und der Aufnahme eines in die Einsteckaufnahme 22 einbringbaren Befestigungsabschnitts 23 (siehe zum Beispiel Figuren 9 und 12) des Ventilkörpers 11 dient. Zur Ausrichtung einer Öffnung 24 des Ventilkörpers 11, über die dem Reifen des Fahrzeugs Luft zuführbar ist, weist der Befestigungsabschnitt 23 des Ventilkörpers 11 eine Abflachung 25 auf (siehe zum Beispiel Figuren 9 und 12), wobei die Einsteckaufnahme 22 komplementär zu dem Befestigungsabschnitt 23 mit Abflachung 25 ausgebildet ist, so dass zur Montage des Ventilkörpers 11 an dem Gehäuse 14 des Reifenluftdrucksensors 12 der Befestigungsabschnitt 23 des Ventilkörpers 11 verdrehsicher in die Einsteckaufnahme 22 einsteckbar und eingesteckt ist.

Das Einstecken des Befestigungsabschnitts 23 des Ventilkörpers 11 in die Einsteckaufnahme 22 des Gehäuses 14 führt dazu, dass das Befestigungselement 17 mit dem Befestigungsabschnitt 23 in Eingriff gebracht wird, worauf nachstehend mit Bezug auf die Figuren 9 bis 14 eingegangen wird.

Die Figuren 9 und 12 zeigen zwei verschiedene Ausführungsvarianten des Ventilkörpers 11, wobei die Varianten sich durch die Ausgestaltung des jeweiligen Befestigungsabschnitts 23 unterscheiden. In Figur 9 weist der Befestigungsabschnitt 23 des Ventilkörpers eine Ausnehmung 26 auf, die bei der konkreten Ausführungsform vollständig umlaufend um den Umfang des Ventilkörpers 11 ausgebildet ist. Denkbar wäre auch nur eine umfangsabschnittsweise Ausbildung der Ausnehmung 26, wobei mit der Ausnehmung 26 gewährleistet sein muss, dass der Rasthaken 18 des Befestigungselements 17 in die Ausnehmung 26 eingreifen kann, um den Ventilkörper 11 an dem Reifenluftdrucksensor 12 zu befestigen. Figur 10 zeigt, wie der Rasthaken 18 in die Ausnehmung 26 eingreift, so dass der Ventilkörper 11 nicht mehr aus der Einsteckaufnahme 22 des Gehäuses herausgezogen werden kann. Als Alternative zu der Ausnehmung 26 ist gemäß der Ausführungsvariante in Figur 12 ein Flansch 27 vorgesehen, der auf der der Abflachung 25 abgewandten Seite des Befestigungsabschnitts 23 an diesem angeformt ist. Beim Montieren des Ventilkörpers 11 an dem Reifenluftdrucksensor 12 hintergreift der Rasthaken 18 des Befestigungselements 17 den Flansch 27, so dass der Ventilkörper 11 nicht mehr aus der Einsteckaufnahme 22 des Befestigungsbereichs 16 herausziehbar ist, was in Figur 13 dargestellt ist. Der Rasthaken 18 steht gemäß den Figuren 10 und 13 mit der Ausnehmung 26 bzw. mit dem Flansch 27 in Eingriff, so dass mit anderen Worten auch der Befestigungsabschnitt 23 des Ventilkörpers 11 mit Hilfe des Befestigungselements 17 lösbar mit dem Befestigungsbereich 16 des Gehäuses 14 in Eingriff steht. Die beiden Ausführungsvarianten des Ventilkörpers 11 weisen als Gemeinsamkeit jeweils eine auf der Umfangsfläche des Ventilkörpers angeformte, rampenförmige Schrägfläche 28 auf, die bei der ersten Ausführungsvariante des Ventilkörpers 11 gemäß Figur 9 an die Ausnehmung 26 angrenzt und bei der zweiten Ausführungsvariante des Ventilkörpers 11 gemäß Figur 12 als Teil des Flansches 27 ausgebildet ist. Die Schrägfläche 28 dient dazu, dass bei Montage des Ventilkörpers 11 an dem Reifenluftdrucksensor 12 der elastisch am Befestigungsbereich 16 gelagerte Rasthaken 18 über die Schrägfläche 28 geschoben wird, ohne dass dazu ein Werkzeug notwendig ist. Sobald der elastisch ausgeschwenkte Rasthaken 18 die Schrägfläche 28 passiert hat, greift er in die Ausnehmung 26 ein (siehe Figur 10) oder er hintergreift den Flansch 27 (siehe Figur 13), um den Befestigungsabschnitt 23 des Ventilkörpers 11 mit dem Befestigungselement 17 des Gehäuses 14 in Eingriff zu bringen. In jedem Fall bewegt sich das Befestigungselement 17 nach Passieren der Schrägfläche 28 aufgrund seiner elastischen Eigenschaft in seine Ausgangsstellung zurück, wodurch das Befestigungselement 17 in Eingriff mit dem Befestigungsabschnitt 23 des Ventilkörpers 11 gelangt. Dabei zeigen die Figuren 10 und 13 eine Verriegelungsposition für den Rasthaken 18, wohingegen in den Figuren 11 und 14 jeweils eine Entriegelungsposition des Rasthakens 18 gezeigt ist. In der Entriegelungsposition ist der Rasthaken 18 außer Eingriff mit dem Befestigungsabschnitt 23 des Ventilkörpers 11 gebracht, was durch die beiden Lagerarme 20a, 20b möglich ist, die eine Schwenkbewegung des Rasthakens 18 um die Drehachse 21 der beiden Lagerarme 20a, 20b ermöglichen, so dass die beiden Lagerarme 20a, 20b jeweils nach Art eines Torsionsstabs oder einer Torsionsfeder wirken, wie vorstehend bereits ausgeführt wurde. Die Schwenkbewegung des Rasthakens 18 geht einher mit einer Drehung der Lagerarme 20a, 20b um ihre Drehachse 21, wodurch das Befestigungselement außer Eingriff mit dem Befestigungsabschnitt 23 des Ventilkörpers 11 gebracht wird.

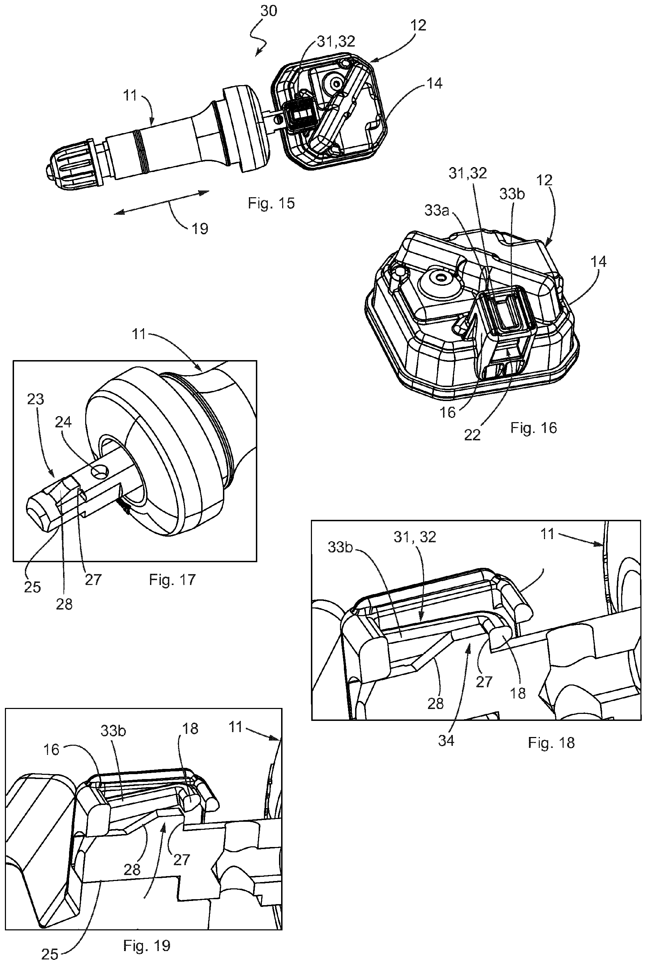

Die Figuren 15 bis 19 zeigen ein Reifendruckkontrollsystem 30 gemäß einer zweiten Ausführungsform der Erfindung. Auch dieses Reifendruckkontrollsystem 30 umfasst einen Ventilkörper 11 und einen Reifendrucksensor 12 mit einem Gehäuse 14, in welchem die Mittel zur Bestimmung von reifenspezifischen Parametern untergebracht sind, wobei auf deren Darstellung für die zweite Ausführungsform verzichtet wird, zumal es sich bei den Mitteln um aus dem Stand der Technik bekannte Maßnahmen handelt.

Auch bei der zweiten Ausführungsform sind der Ventilkörper 11 und der Reifendrucksensor 12 mittels eines aber jetzt anders ausgebildeten Befestigungselements 31 lösbar miteinander verbunden. Das Befestigungselement 31 ist wiederum an dem schornsteinförmigen Befestigungsbereich 16 des Gehäuses 14 ausgebildet, wie beispielsweise aus Figur 16 ersichtlich ist. Dabei ist das Befestigungselement 31 bügelförmig bzw. als U-förmiger Bügel 32 ausgebildet. Der die beiden Schenkel des U-förmigen Bügels 32 verbindende Steg entspricht von seiner Funktion dem Rasthaken 18, wobei die beiden Schenkel des Bügels 32 zwei Lagerarme 33a, 33b für den Rasthaken 18 definieren. Die beiden Lagerarme 33a, 33b, die sich parallel zur Längsrichtung 19 des Ventilkörpers 11 erstrecken, sind elastisch ausgebildet und an dem Befestigungsbereich 16 angebracht. Genauer gesagt sind die dem Rasthaken 18 abgewandten Längsenden des Bügels 31 am Gehäuse 14 gelagert und jeweils nach Art eines Federarms ausgebildet. Der Befestigungsabschnitt 23 des Ventilkörpers 11 weist bei der zweiten Ausführungsform ebenfalls einen Flansch 27 auf, der bei dieser Ausführung als Befestigungsansatz 33 (siehe zum Beispiel Figur 18 oder 19) definiert ist, der am Befestigungsabschnitt 23 des Ventilkörpers 11 angeformt ist. Alternativ wäre es aber auch denkbar, dass statt des Flansches 27 eine Ausnehmung an dem Befestigungsabschnitt 23 des Ventilkörpers 23 ausgebildet ist, in welche der Rasthaken 18 der zweiten Ausführungsform eingreift.

Zu Montagezwecken des Ventilkörpers 11 an dem Reifenluftdrucksensor 12 wird der Ventilkörper 11 mit seiner Abflachung 25 entsprechend ausgerichtet in die Einsteckaufnahme 22 des Befestigungsbereiches 16 eingeführt, wodurch der elastisch schwenkbare und U-förmig ausgebildete Bügel 32 des Befestigungselements 31, das einstückig mit dem Gehäuse 14 ausgebildet ist, auf der rampenförmigen Schrägfläche 28 gleitet und aufgrund der elastischen Lagerarme 33a, 33b verschwenkt wird, bis der Bügel 32 die Schrägfläche 28 passiert hat und dann den Befestigungsansatz 33 hintergreift, was der Verriegelungsposition für den Rasthaken 18 entspricht, die in Figur 18 gezeigt ist. Folglich ist eine werkzeuglose Montage möglich, wobei der U-förmige Bügel 32 nach Art einer Schnappfeder auslenkt und den Befestigungsansatz 33 umgreift. Der Befestigungsansatz 33 entspricht im Wesentlichen dem bereits zuvor für die erste Ausführungsform diskutierten Flansch 27. In der in Figur 18 gezeigten Verriegelungsposition, in welcher der Ventilkörper 11 lösbar an dem Reifenluftdrucksensor 12 angebracht ist, übergreift der U-förmige Bügel 32 den am Befestigungsabschnitt 23 des Ventilkörpers 11 angeformten Befestigungsansatz 33, so dass der Ventilkörper 11, der in der Einsteckaufnahme 22 angeordnet ist, nicht aus dieser herausziehbar ist.

Um den Ventilkörper 11 von dem Reifenluftdrucksensor 12 zu demontieren, muss der U-förmgie Bügel 32 verschwenkt werden, damit dieser nicht mehr in dem Bewegungspfad des Befestigungsansatz 33 blockierend angeordnet ist. Mit anderen Worten muss der U-förmige Bügel 32 in die in Figur 19 gezeigte Entriegelungsposition bewegt werden, in welcher der Rasthaken 18 außer Eingriff mit dem Befestigungsabschnitt 23 des Ventilkörpers 11 gebracht ist, so dass der Ventilkörper 11 in Längsrichtung 19 aus der Einsteckaufnahme 22 herausgezogen werden kann. Anders als bei der ersten Ausführungsform ist der Rasthaken 18 bzw. das Befestigungselement 31 bzw. der U-förmige Bügel 32 endseitig an seinen dem Rasthaken 18 abgewandten Längsende am Gehäuse 14 gelagert und nach Art eines Federarms ausgebildet ist, der bei einer von der Längsrichtung 19 des Ventilkörpers 11 wegweisenden Schwenkbewegung den Rasthaken 18 außer Eingriff mit dem Ventilkörper 11 bzw. dem Befestigungsansatz 33 des Ventilkörpers 11 bringt.

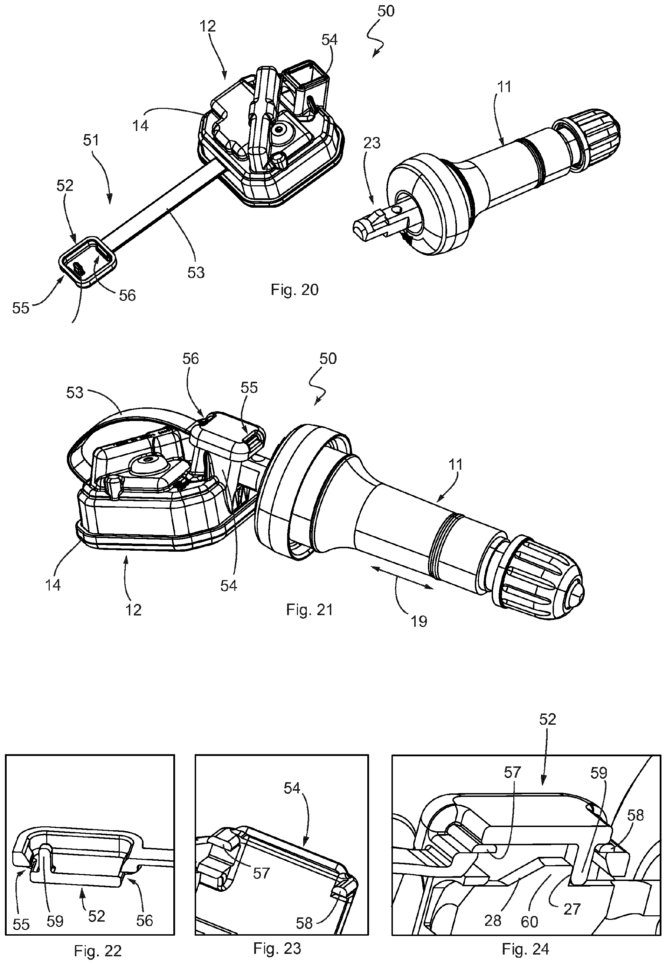

Eine dritte Ausführungsform eines Reifendruckkontrollsystems 50 gemäß der vorliegenden Erfindung ist in den Figuren 20 bis 24 dargestellt. Das Reifendruckkontrollsystem 50 umfasst wiederum den Ventilkörper 11 und den Reifenluftdrucksensor 12. Der Ventilkörper 11 soll mit Hilfe eines einstückig mit dem Gehäuse 14 des Reifenluftdrucksensors 12 ausgebildeten Befestigungselements 51 an dem Reifenluftdrucksensor 12 angebracht werden. Das Befestigungselement 51 weist bei der dritten Ausführungsform des Reifendruckkontrollsystems 50 eine deckelförmig ausgebildete Klemmkappe 52 auf, die über ein scharnierartiges Band mit dem Gehäuse 14 verbunden ist. Das scharnierartige Band stellt ein Filmscharnier 53 dar, das einstückig mit der Klemmkappe 52 und dem Gehäuse 14 ausgebildet ist. Mit Hilfe des Filmscharniers 53 ist die Klemmkappe 52 relativ zu dem eigentlichen Gehäuse 14 bewegbar, obgleich die Klemmkappe 52 des Befestigungselements 51 einstückig mit dem Gehäuse 14 ausgebildet ist.

Das Gehäuse 14 weist einen kastenförmig sowie schornsteinförmig ausgebildeten Befestigungsbereich 54 (siehe zum Beispiel Figur 20) auf, auf den die Klemmkappe 52 des Befestigungselements 51 aufgedrückt werden kann, wodurch sich die Klemmkappe 52 mit dem Befestigungsbereich 54 verklemmt und durch die Verklemmung an dem Befestigungsbereich 54 lösbar befestigt ist, wie es in Figur 21 gezeigt ist.

In der Klemmkappe 52 sind zwei in Längsrichtung 19 des Ventilkörpers 11 hintereinander liegend angeordnete Klemmaussparungen 55, 56 ausgebildet, die sich quer zur Längsrichtung 19 erstrecken. Die Klemmaussparungen 55, 56, die besser in einer perspektivischen Seitenschnittansicht in Figur 22 ersichtlich sind, wirken mit entsprechend in dem Befestigungsbereich 54 ausgebildeten Klemmstegen 57 und 58 zusammen, die in Figur 23 erkennbar sind. Zur Montage wird die Klemmkappe 52 auf den Befestigungsbereich 54 gedrückt, wodurch sich die Klemmstege 57 und 58 des Befestigungsbereich 54 in die Klemmaussparungen 55, 56 der Klemmkappe 52 drücken, was aufgrund des elastischen Materials des Gehäuses 14 (und damit der Klemmkappe 52 und des Befestigungsbereiches 54) möglich ist.

Das Aufdrücken der Klemmkappe 52 auf den Befestigungsbereich 54 kann erfolgen, nachdem der Befestigungsabschnitt 23 des Ventilkörpers 11 in die Einsteckaufnahme 22 des Gehäuses 14 eingeschoben ist. Bei dieser Vorgehensweise hintergreift dann beim Aufdrücken ein Klemmansatz 59, der sich bei in die Einsteckaufnahme 22 eingestecktem Ventilkörper 11 von der Klemmkappe 52 quer zur Längsrichtung 19 des Ventilkörpers 11 erstreckt, einen am Befestigungsabschnitt 23 des Ventilkörpers 11 angeformten Vorsprung 60 derart, dass eine Bewegung des Ventilkörpers 11 in dessen Längsrichtung 19 weg von dem Gehäuse 14 blockiert ist. Diese Verriegelungsstellung ist in Figur 24 dargestellt.

Das Aufdrücken der Klemmkappe 52 auf den Befestigungsbereich 54 kann aber auch erfolgen, bevor der Befestigungsabschnitt 23 des Ventilkörpers 11 in die Einsteckaufnahme 22 des Gehäuses 14 eingeschoben ist. Dann befindet sich der Klemmansatz 59 in dem Bewegungsweg des Ventilkörpers 11, wenn dieser in die Einsteckaufnahme 22 des Gehäuses 14 eingeschoben wird. Da der Klemmansatz 59 elastisch ausgebildet ist, drückt der eingeschobene Befestigungsabschnitt 23 des Ventilkörpers 11 den Klemmansatz 59 aus dem Bewegungsweg, was durch die rampenförmige Schrägfläche 28 unterstützt wird, die auf dem Befestigungsabschnitt 23 des Ventilkörpers 11 ausgebildet ist und die in den Vorsprung 60 übergeht, der mit dem Flansch 27 vergleichbar ist. Wenn die Schrägfläche 59 den Klemmansatz 59 passiert hat, wird der Klemmansatz 59 sich wieder elastisch zurückverformen und den Vorsprung 60 derart hintergreifen, dass eine Bewegung des Befestigungsabschnitts aus der Einsteckaufnahme 22 heraus blockiert. Die Klemmkappe 52 steht folglich mit dem Befestigungsabschnitt 23 des Ventilkörpers 11 in Eingriff.

Mit anderen Worten weist der kastenförmige Befestigungsbereich 54 des Gehäuses 14 die sich bei montiertem Ventilkörper 11 quer zu dessen Längsrichtung 19 erstreckenden Klemmstege 57, 58 auf, wobei in der Klemmkappe 52 die zu den Klemmstegen 57, 58 komplementär ausgebildeten Klemmaussparungen 55, 56 ausgebildet sind. Die Klemmkappe 52 ist über eine Klemmverbindung, die nach Montage der Klemmkappe 52 an dem Befestigungsbereich 54 von dem in den Klemmaussparungen 55, 56 eingeklemmten Klemmstegen 57, 58 ausgebildet, an dem Gehäuse 14 befestigt und blockiert bzw. verriegelt eine Bewegung des Befestigungsabschnitts 23 des Ventilkörpers 11.

Um den Ventilkörper 11 von dem Reifenluftdrucksensor 12 zu demontieren, muss nur die Klemmkappe 52 wieder von dem Befestigungsbereich 54 des Gehäuses 14 abgenommen werden, wodurch der Klemmansatz 59 aus dem Bewegungsweg des Ventilkörpers 11 gelangt, so dass dieser widerstandslos und blockadefrei aus der Einsteckaufnahme 22 herausziehbar ist.

Soweit vorstehend bei den drei Ausführungsformen gleiche Bezugszeichen verwendet werden, betreffen diese jeweils identische oder gleiche Elemente oder Bauteile, so dass die einmalige Beschreibung der Elemente oder Bauteile einer Ausführungsform auch für die übrigen Ausführungsformen gilt.

Die vorstehend beschriebene Erfindung ist selbstverständlich nicht auf die beschriebenen und dargestellten Ausführungsformen beschränkt. Es ist ersichtlich, dass an den in der Zeichnung dargestellten Ausführungsformen zahlreiche, dem Fachmann entsprechend der beabsichtigten Anwendung naheliegende Abänderungen vorgenommen werden können, ohne dass dadurch der Bereich der Erfindung verlassen wird. Zur Erfindung gehört alles dasjenige, was in der Beschreibung enthalten und/oder in der Zeichnung dargestellt ist, einschließlich dessen, was abweichend von den konkreten Ausführungsbeispielen für den Fachmann naheliegt.

## Patentansprüche

1. Reifendruckkontrollsystem (10; 30; 50) für ein Fahrzeug zur Ermittlung reifenspezifischer Parameter, aufweisend einen Ventilkörper (11), wenigstens ein Befestigungselement (17) und einen Reifenluftdrucksensor (12) mit einem Gehäuse (14), in welchem Mittel (15) zur Bestimmung mindestens eines reifenspezifischen Parameters und zur drahtlosen Übertragung des mindestens einen reifenspezifischen Parameters an ein fahrzeugseitiges Steuergerät untergebracht sind,
wobei das Gehäuse (14) einen Befestigungsbereich (16; 54) aufweist und der Ventilkörper (11) einen Befestigungsabschnitt (23) umfasst, und
wobei der Befestigungsabschnitt (23) des Ventilkörpers (11) mit Hilfe eines Befestigungselements (17; 31; 51) lösbar mit dem Befestigungsbereich (16; 54) des Gehäuses (14) in Eingriff steht,
**dadurch gekennzeichnet, dass**
das Befestigungselement (17; 31; 51) einstückig mit dem Gehäuse (14) des Reifenluftdrucksensors (12) ausgebildet ist, wobei das Befestigungselement zusammen mit dem Gehäuse aus einem einzigen und einheitlichen Werkstoff gefertigt ist.

2. Reifendruckkontrollsystem (10; 30; 50) nach Anspruch 1, **dadurch gekennzeichnet, dass** der Befestigungsabschnitt (23) des Ventilkörpers (11) eine rampenförmige Schrägfläche (28) aufweist, die auf der Umfangsfläche des Ventilkörpers (11) angeformt ist und über welche das elastisch gelagerte Befestigungselement (17; 31; 51) bei Montage des Ventilkörpers (11) an dem Reifenluftdrucksensor (12) schiebbar ist, um den Befestigungsabschnitt (23) des Ventilkörpers (11) mit dem Befestigungselement (17; 31; 51) des Gehäuses (14) in Eingriff zu bringen.

3. Reifendruckkontrollsystem (10; 30; 50) nach Anspruch 1 oder 2, **dadurch gekennzeichnet, dass** das Befestigungselement (17; 31) wenigstens einen Rasthaken (18) aufweist, der sich bei montiertem Ventilkörper (11) in dessen Längsrichtung (19) erstreckt.

4. Reifendruckkontrollsystem (10; 30; 50) nach Anspruch 3, **dadurch gekennzeichnet, dass** nach Montage des Ventilkörpers (11) an dem Reifenluftdrucksensor (12) der wenigstens eine Rasthaken (18) des Befestigungselements (17; 31) in eine am Befestigungsabschnitt (23) des Ventilkörpers (11) ausgebildete Ausnehmung (26) eingreift.

5. Reifendruckkontrollsystem (10; 30; 50) nach Anspruch 3, **dadurch gekennzeichnet, dass** nach Montage des Ventilkörpers (11) an dem Reifenluftdrucksensor (12) der wenigstens eine Rasthaken (18) des Befestigungselements (17; 31) einen am Befestigungsabschnitt (23) des Ventilkörpers (11) angeformten Flansch (27) hintergreift.

6. Reifendruckkontrollsystem (10; 30; 50) nach einem der Ansprüche 3 bis 5, **dadurch gekennzeichnet, dass** der wenigstens eine Rasthaken (18) über wenigstens einen elastisch verformbaren Lagerarm (20a, 20b; 33a, 33b) am Befestigungsbereich (16) relativ bewegbar zu dem Gehäuse (14) gehalten ist.

7. Reifendruckkontrollsystem (10; 30; 50) nach Anspruch 6, **dadurch gekennzeichnet, dass** sich der wenigstens eine Lagerarm (20a, 20b) bei montiertem Ventilkörper (11) quer zu dessen Längsrichtung (19) erstreckt, wobei der wenigstens eine Lagerarm (20a, 20b) nach Art eines Torsionsstabs ausgebildet ist, durch welchen der wenigstens eine Rasthaken (18) bei einer Schwenkbewegung um die Drehachse (19) des wenigstens einen Lagerarms (20a, 20b) außer Eingriff mit dem Befestigungsabschnitt (23) des Ventilkörpers (11) bringbar ist.

8. Reifendruckkontrollsystem (10; 30; 50) nach Anspruch 6, **dadurch gekennzeichnet, dass** sich der wenigstens eine Lagerarm (33a, 33b) bei montiertem Ventilkörper (11) parallel zu dessen Längsrichtung (19) erstreckt, wobei der wenigstens eine Lagerarm (33a, 33b) endseitig an seinem dem Rasthaken (18) abgewandten Längsende am Gehäuse (14) gelagert und nach Art eines Federarms ausgebildet ist, der bei einer von der Längsrichtung (19) des Ventilkörpers (11) wegweisenden Schwenkbewegung den wenigstens einen Rasthaken (18) außer Eingriff mit dem Ventilkörper (11) bringt.

9. Reifendruckkontrollsystem (10; 30; 50) nach Anspruch 8, **dadurch gekennzeichnet, dass** der wenigstens eine Rasthaken (18) als elastisch schwenkbarer und U-förmiger Bügel (32) ausgebildet ist, der nach Montage des Ventilkörpers (11) an dem Reifenluftdrucksensor (12) einen am Befestigungsabschnitt (23) des Ventilkörpers (11) angeformten Befestigungsansatz (34) übergreift.

10. Reifendruckkontrollsystem (10; 30; 50) nach Anspruch 2, **dadurch gekennzeichnet, dass** das Befestigungselement (51) eine deckelförmig ausgebildete Klemmkappe (52) aufweist, die über ein Filmscharnier (53) mit dem Gehäuse (14) verbunden ist, wobei der Befestigungsbereich (54) des Gehäuses (14) kastenförmig ausgebildet ist und die Klemmkappe (52) nach Montage des Ventilkörpers (11) an dem Reifenluftdrucksensor (12) auf dem kastenförmigen Befestigungsbereich (54) lösbar befestigt ist und dabei mit dem Befestigungsabschnitt (23) des Ventilkörpers (11) in Eingriff steht.

11. Reifendruckkontrollsystem (10; 30; 50) nach Anspruch 10, **dadurch gekennzeichnet, dass** der kastenförmige Befestigungsbereich (54) des Gehäuses (14) wenigstens einen sich bei montiertem Ventilkörper (11) quer zu dessen Längsrichtung (19) erstreckenden Klemmsteg (57, 58) aufweist und in der Klemmkappe (52) wenigstens eine zu dem wenigstens einen Klemmsteg (57, 58) komplementär ausgebildete Klemmaussparung (55, 56) ausgebildet ist, wobei die Klemmkappe (52) über eine Klemmverbindung, die nach Montage der Klemmkappe (52) an dem Befestigungsbereich (54) von dem in der wenigstens einen Klemmaussparung (55, 56) eingeklemmten Klemmsteg (57, 58) ausgebildet ist, an dem Gehäuse (14) den Befestigungsabschnitt (23) des Ventilkörpers (11) verriegelnd fixiert befestigt ist.

12. Reifendruckkontrollsystem (10; 30; 50) nach Anspruch 10 oder 11, **dadurch gekennzeichnet, dass** ein Klemmansatz (59), der sich bei montiertem Ventilkörper (11) von der Klemmkappe (52) quer zur Längsrichtung des Ventilkörpers (11) erstreckt, einen am Befestigungsabschnitt (23) des Ventilkörpers (11) angeformten Vorsprung (60) derart hintergreift, dass eine Bewegung des Ventilkörpers (11) in dessen Längsrichtung (19) weg von dem Gehäuse (14) blockiert ist.

13. Reifendruckkontrollsystem (10; 30; 50) nach einem der vorhergehenden Ansprüche, **dadurch gekennzeichnet, dass** der Befestigungsabschnitt (23) des Ventilkörpers (11) zumindest abschnittsweise eine Abflachung (25) aufweist und der Befestigungsbereich (16) des Gehäuses (14) eine komplementär zur Abflachung (25) ausgebildete Einsteckaufnahme (22) aufweist, so dass zur Montage des Ventilkörpers (11) an dem Reifenluftdrucksensor (12) der Befestigungsabschnitt (23) des Ventilkörpers (11) verdrehsicher in die Einsteckaufnahme (22) einsteckbar ist.

## Claims

1. A tyre pressure monitoring system (10; 30; 50) for a vehicle for determining tyre-specific parameters, which comprises a valve body (11), at least one fastening element (17) and a tyre pressure sensor (12) with a housing (14) in which means (15) for determining at least one tyre-specific parameter and means for wireless transmission of the at least one tyre-specific parameter to an on-board control device are housed,
wherein the housing (14) has a fastening region (16; 54) and the valve body (11) comprises a fastening portion (23), and
wherein the fastening portion (23) of the valve body (11) is detachably engaged with the help of a fastening element (17; 31; 51) with the fastening region (16; 54) of the housing (14),
**characterized in that**
the fastening element (17; 31; 51) is formed integrally with the housing (14) of the tyre pressure sensor (12), wherein the fastening element is produced along with the housing from a single, uniform material.

2. The tyre pressure monitoring system (10; 30; 50) according to claim 1, **characterized in that** the fastening portion (23) of the valve body (11) has a ramp-like oblique surface (28) which is integrally moulded on the circumferential surface of the valve body (11) and over which the flexibly mounted fastening element (17; 31; 51) can be moved when fastening the valve body (11) to the tyre pressure sensor (12), in order to engage the fastening portion (23) of the valve body (11) with the fastening element (17; 31; 51) of the housing (14).

3. The tyre pressure monitoring system (10; 30; 50) according to claim 1 or 2, **characterized in that** the fastening element (17; 31) has at least one snap-in hook (18) which, when the valve body (11) is mounted, extends in the longitudinal direction (19) thereof.

4. The tyre pressure monitoring system (10; 30; 50) according to claim 3, **characterized in that** the at least one snap-in hook (18) of the fastening element (17; 31) engages with a recess (26) configured on the fastening portion (23) of the valve body (11) when the valve body (11) has been mounted on the tyre pressure sensor (12).

5. The tyre pressure monitoring system (10; 30; 50) according to claim 3, **characterized in that** the at least one snap-in hook (18) of the fastening element (17; 31) engages behind a flange (27) integrally moulded on the fastening portion (23) of the valve body (11) when the valve body (11) has been mounted on the tyre pressure sensor (12).

6. The tyre pressure monitoring system (10; 30; 50) according to one of claims 3 to 5, **characterized in that** the at least one snap-in hook (18) is retained on the fastening region (16) and can be moved in relation to the housing (14) via at least one elastically deformable support arm (20a, 20b; 33a, 33b).

7. The tyre pressure monitoring system (10; 30; 50) according to claim 6, **characterized in that** the at least one support arm (20a, 20b) extends transverse to the longitudinal direction (19) of the valve body (11) when said valve body is mounted, wherein the at least one support arm (20a, 20b) is configured in the manner of a torsion bar, by means of which the at least one snap-in hook (18) can be disengaged from the fastening portion (23) of the valve body (11) with a swivelling movement about the rotational axis (19) of the at least one support arm (20a, 20b).

8. The tyre pressure monitoring system (10; 30; 50) according to claim 6, **characterized in that** the at least one support arm (33a, 33b) extends parallel to the longitudinal direction (19) of the valve body (11) when said valve body is mounted, wherein the at least one support arm (33a, 33b) is supported at the end on its longitudinal end facing away from the snap-in hook (18) on the housing (14) and is configured in the manner of a spring arm which, with a swivelling movement pointing away from the longitudinal direction (19) of the valve body (11), disengages the at least one snap-in hook (18) from the valve body (11).

9. The tyre pressure monitoring system (10; 30; 50) according to claim 8, **characterized in that** the at least one snap-in hook (18) is configured as a U-shaped clamp (32) that can be swivelled in a flexible manner which, when the valve body (11) has been mounted on the tyre pressure sensor (12), overlaps a fastening lug (34) which is integrally moulded on the fastening portion (23) of the valve body (11).

10. The tyre pressure monitoring system (10; 30; 50) according to claim 2, **characterized in that** the fastening element (51) has a cover-shaped clamp cap (52), which is connected to the housing (14) via an integral hinge (53), wherein the fastening region (54) of the housing (14) is configured in the form of a box and, after the valve body (11) has been mounted on the tyre pressure sensor (12), the clamp cap (52) is releasably fastened on the box-shaped fastening region (54) and thereby engaged with the fastening portion (23) of the valve body (11).

11. The tyre pressure monitoring system (10; 30; 50) according to claim 10, **characterized in that** the box-shaped fastening region (54) of the housing (14) has at least one clamping bar (57; 58), which extends in a longitudinal direction (19) transverse to the valve body (11) when said valve body is mounted, and at least one clamping recess (55, 56) is configured in the clamp cap (52) in complementary fashion to the at least one clamping bar (57, 58), wherein via a clamp connection which, after mounting the clamp cap (52) to the fastening region (54), is configured on the fastening region (54) by the clamping bar (57, 58) clamped in the at least one clamping recess (55, 56), the clamp cap (52) is fastened to the housing (14) in such a manner that the fastening portion (23) of the valve body (11) is locked.

12. The tyre pressure monitoring system (10; 30; 50) according to claim 10 or 11, **characterized in that** a clamping lug (59) which, when the valve body (11) has been mounted, extends from the clamp cap (52) transverse to the longitudinal direction of the valve body (11), engages behind a projection (60) which is integrally moulded on the fastening portion (23) of the valve body (11), in such a way that it blocks a movement of the valve body (11) in the longitudinal direction (19) thereof away from the housing (14).

13. The tyre pressure monitoring system (10; 30; 50) according to one of the preceding claims, **characterized in that** the fastening portion (23) of the valve body (11) has a bevel (25) at least in sections and the fastening region (16) of the housing (14) has a plug-in receptacle (22) configured in complementary fashion to the bevel (25) so that, when mounting the valve body (11) to the tyre pressure sensor (12), the fastening portion (23) of the valve body (11) is inserted in a torsion-proof manner in the plug-in receptacle (22).

## Revendications

1. Système de contrôle de pression de pneu (10,30,50) pour un véhicule automobile pour la détection des paramètres spécifiques au pneu, comportant un corps de valve (11), au moins un élément de fixation (17) et un capteur de pression d'air de pneu (12) avec un boîtier (14), dans lequel sont logés des moyens (15) pour déterminer au moins un paramètre spécifique au pneu et pour la transmission sans fil d'au moins un paramètre spécifique au pneu à un appareil de commande monté sur le véhicule,
le boîtier (14) comportant une zone de fixation (16,54) et le corps de vanne (11) comprenant une section de fixation (23), et
la section de fixation (23) du corps de valve (11) venant en prise de façon amovible avec la zone de fixation (16,54) du boîtier (14) à l'aide d'un élément de fixation (17,31,51),
**caractérisé en ce que**
l'élément de fixation (17,31,51) étant constitué en une seule pièce avec le boîtier (14) du capteur de pression d'air du pneu (12), l'élément de fixation étant fabriqué avec le boîtier à partir d'un matériau unique et uniforme.

2. Système de contrôle de pression de pneu (10,30,50) selon la revendication 1, **caractérisé en ce que** la section de fixation (23) du corps de valve (11) comporte une surface inclinée en forme de rampe (28), qui est conformée sur la surface périphérique du corps de valve (11) et sur laquelle l'élément de fixation logé élastiquement (17,31,51) peut être déplacé sur le capteur de pression d'air de pneu (12) lors du montage du corps de valve (11) pour mettre en prise la section de fixation (23) du corps de valve (11) avec l'élément de fixation (17,31,51) du boîtier (14).

3. Système de contrôle de pression de pneu (10,30,50) selon la revendication 1 ou 2, **caractérisé en ce que** l'élément de fixation (17,31) comporte au moins un crochet d'enclenchement (18), qui s'étend dans son sens longitudinal (19) lorsque le corps de valve (11) est monté.

4. Système de contrôle de pression de pneu (10,30,50) selon la revendication 3, **caractérisé en ce qu'**après montage du corps de valve (11) sur le capteur de pression d'air du pneu (12), au moins un crochet d'enclenchement (18) de l'élément de fixation (17,31) vient en prise dans une cavité (26) constituée dans une section de fixation (23) du corps de valve (11).

5. Système de contrôle de pression de pneu (10,30,50) selon la revendication 3, **caractérisé en ce qu'**après montage du corps de valve (11) sur le capteur de pression d'air du pneu (12), au moins un crochet d'enclenchement (18) de l'élément de fixation (17,31) vient en prise arrière avec une bride (27) conformée sur la section de fixation (23) du corps de valve (11).

6. Système de contrôle de pression de pneu (10,30,50) selon l'une quelconque des revendications 3 à 5, **caractérisé en ce qu'**au moins un crochet d'enclenchement (18) est maintenu sur au moins un bras d'appui (20a,20b ;33a,33b) élastiquement déformable pouvant être déplacé sur la zone de fixation (16) par rapport au boîtier (14).

7. Système de contrôle de pression de pneu (10,30,50) selon la revendication 6, **caractérisé en ce qu'**au moins un bras d'appui (20a,20b) s'étend avec le corps de valve (11) monté en diagonale par rapport à son sens longitudinal (19), au moins un bras d'appui (20a,20b) étant constitué à la façon d'une barre de torsion par laquelle au moins un crochet d'enclenchement (18) peut être désengagé de la section de fixation (23) du corps de valve (11) lors d'un mouvement de pivotement autour de l'axe de rotation (19) d'au moins un bras d'appui (20a,20b).

8. Système de contrôle de pression de pneu (10,30,50) selon la revendication 6, **caractérisé en ce qu'**au moins un bras d'appui (33a,33b) s'étend avec le corps de valve (11) monté parallèlement à son sens longitudinal (19), au moins un bras d'appui (33a,33b) étant logé sur le boîtier (14) à l'extrémité sur son extrémité longitudinale opposée au crochet d'enclenchement (18) et étant constitué à la manière d'un bras de ressort, qui désengage au moins un crochet d'enclenchement (18) du corps de valve (11) lors d'un mouvement de pivotement s'écartant du sens longitudinal (19) du corps de valve (11).

9. Système de contrôle de pression de pneu (10,30,50) selon la revendication 8, **caractérisé en ce qu'**au moins un crochet d'enclenchement (18) est constitué comme étrier (32) pouvant pivoter élastiquement et en forme de U, qui après montage du corps de valve (11) sur le capteur de pression d'air du pneu (12), vient en prise sur une saillie de fixation (34) conformée sur la section de fixation (23) du corps de valve (11).

10. Système de contrôle de pression de pneu (10,30,50) selon la revendication 2, **caractérisé en ce que** l'élément de fixation (51) comporte un capuchon de serrage (52) constitué en forme de couvercle, qui est relié au boîtier (14) par le biais d'une bande-charnière (53), la zone de fixation (54) du boîtier (14) étant constituée en forme de caisson et le capuchon de serrage (52) étant fixé de manière amovible sur la zone de fixation (54) en forme de caisson après montage du corps de valve (11) sur le capteur de pression d'air du pneu (12) et étant en prise à cet effet avec la section de fixation (23) du corps de valve (11).

11. Système de contrôle de pression de pneu (10,30,50) selon la revendication 10, **caractérisé en ce que** la zone de fixation (54) en forme de caisson du boîtier (14) comporte au moins une barrette de serrage (57,58) s'étendant en diagonale par rapport à son sens longitudinal (19) lorsque le corps de valve (11) est monté et au moins une cavité de serrage (55,56) constituée de façon complémentaire à au moins une barrette de serrage (57,58) étant constituée dans le capuchon de serrage (52), le capuchon de serrage (52) étant fixé de manière fixe verrouillant la section de fixation (23) du corps de valve (11) sur le boîtier (14), par le biais d'une liaison de serrage qui est constituée après montage du capuchon de serrage (52) sur la zone de fixation (54) par la barrette de serrage (57,58) serrée dans au moins une cavité de serrage (55, 56).

12. Système de contrôle de pression de pneu (10,30,50) selon la revendication 10 ou 11, **caractérisé en ce qu'**un bloc de serrage (59) s'étendant avec le corps de valve (11) monté du capuchon de serrage (52) en diagonale par rapport au sens longitudinal du corps de valve (11), vient en prise arrière avec une saillie (60) conformée sur la section de fixation (23) du corps de valve (11) de telle manière qu'un mouvement du corps de valve (11) dans le sens longitudinal (19) de celui-ci, est bloqué éloigné du boîtier (14).

13. Système de contrôle de pression de pneu (10,30,50) selon l'une quelconque des revendications précédentes, **caractérisé en ce que** la section de fixation (23) du corps de valve (11) comporte au moins par segment un méplat (25) et la zone de fixation (16) du boîtier (14) comporte un logement d'emboîtement (22) constitué en complémentarité au méplat (25) de manière que pour le montage du corps de valve (11) sur le capteur de pression d'air du pneu (12), la section de fixation (23) du corps de valve (11) peut être emboîtée solidaire en rotation dans le logement d'emboîtement (22).
